(19) Europäisches Patentamt
European Patent Office
Office européen des brevets

(11) EP 1 087 658 B1

(12) **EUROPEAN PATENT SPECIFICATION**

(45) Date of publication and mention
of the grant of the patent:
**21.01.2004 Bulletin 2004/04**

(51) Int Cl.[7]: **A01N 25/04**, A01N 43/50,
A01N 37/46
// A01N43:50, A01N25:04,
A01N37:46, A01N25:04

(21) Application number: **99920222.9**

(22) Date of filing: **30.04.1999**

(86) International application number:
**PCT/US1999/009512**

(87) International publication number:
**WO 1999/065301 (23.12.1999 Gazette 1999/51)**

(54) **BIOLOGICALLY-ACTIVE MICRODISPERSION COMPOSITION**

BIOLOGISCH AKTIVE MIKRODISPERSIONSZUSAMMENSETZUNG

COMPOSITION DE MICRODISPERSION BIOLOGIQUEMENT ACTIVE

(84) Designated Contracting States:
**AT BE CH CY DE DK ES FI FR GB GR IE IT LI LU MC NL PT SE**

(30) Priority: **17.06.1998 US 98842**

(43) Date of publication of application:
**04.04.2001 Bulletin 2001/14**

(73) Proprietors:
• **UNIROYAL CHEMICAL COMPANY, Inc.**
  **Middlebury Connecticut 06749 (US)**
• **Gustafson LLC**
  **Plano, TX 75093 (US)**

(72) Inventor: **XIE, Min**
**Plano, TX 75093 (US)**

(74) Representative: **Spott, Gottfried, Dr.**
**Sendlinger-Tor-Platz 11**
**80336 München (DE)**

(56) References cited:
**EP-A- 0 300 691**          **EP-A- 0 404 210**
**WO-A-94/20072**           **WO-A-95/23590**
**DE-A- 1 567 085**         **FR-A- 1 026 727**
**GB-A- 828 414**           **US-A- 2 420 295**

EP 1 087 658 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

Field of the Invention

This invention relates to a biologically-active microdispersion composition. More particularly, this invention relates to a water-dilutable clear stable microdispersion comprising a solid, water-insoluble biologically-active ingredient.

Background of the Invention

Biologically-active chemicals are often insoluble in water. These chemicals either have to be dissolved in organic solvents or formulated in the form of emulsions or suspensions. Organic solvents are undesirable for environmental and cost reasons. Emulsion and suspension formulations can have limited stability with respect to separation of their components.

In recent years, microemulsions have been used in an attempt to overcome these problems. Microemulsions are a class of colloidal systems which consist of oil, water, and surfactant. As a general rule, oil refers to a water-immiscible liquid.

Water-based microemulsions are particularly desirable because of their increased stability, lack of organic solvent, and ease of use. In water-based microemulsions, the oil phase is dispersed in water such that the dispersed droplets are so small in size (e.g., 10 to 100 nm in diameter) that the microemulsion appears clear or transparent to the naked eye. However, water-based microemulsions are difficult to formulate because for any given oil, a precise surfactant composition is needed to achieve a clear, stable state. Furthermore, the microemulsions can often require a high amount of surfactant compared to the volume of the oil.

Most biologically-active ingredients (a.i.) fall into one of two groups: the first group includes those a.i. which are oily liquids at ambient temperature and are immiscible with water; and the second group includes those a.i. which are solids at ambient temperature and, for all practical purposes, insoluble in water.

To prepare a microemulsion of a solid a.i., the solid a.i. are commonly first dissolved in a non-polar hydrophobic solvent before formulating the a.i. into the microemulsion. However, use of the non-polar hydrophobic solvent is undesirable because the solvents take up room in the microemulsion and they also require the use of more surfactant, creating potential environmental and toxicity problems.

A microdispersion is a colloidal system which is composed of a hydrophobic phase which is finely dispersed in an aqueous phase with the dispersed particles ranging from about 10 to about 500 (typically from about 10 to about 100) nanometers in size. As a result of the very small dispersed particle size, the system visually appears clear to transparent. Unlike microemulsions, the dispersed hydrophobic phase contains solid materials which are not completely solubilized into liquid form. Also unlike microemulsions, microdispersions are usually not thermodynamically stable. However, with proper formulation techniques, microdispersions can retain long-term kinetic stability against the thermodynamically favored crystallization of the solid material out of their dispersed state.

U. S. Patent No. 5,145,684 describes dispersible particles with an average particle size of less than about 400 nm, consisting essentially of a crystalline drug substance having a surface modifier adsorbed on the surface thereof.

U. S. Patent No. 5,306,488 describes a cosmetic composition containing a wax microdispersion in a liquid vehicle.

U. S. Patent No. 5,334,585 describes a pyrethroid microemulsion composition comprising at least one pyrethroid in liquid form, a three-component surfactant system, and water.

U. S. Patent No. 5,389,688 describes a water based microemulsion comprising a water insoluble agriculturally active ingredient, a surfactant, a lactam, and at least about 80 percent by weight of water.

U. S. Patent No. 5,622,883 describes a nanoparticulate dispersion comprising a surface active surfactant and a pharmaceutical chemical attached to a photographic coupler molecule.

European Patent Application 0 648 414 A2 describes a water-dilutable microemulsion comprising an active ingredient, a non-polar water-immiscible solvent, a _ surfactant system, and water.

PCT Application WO 96/08150 describes an aqueous pesticidal microemulsion composition comprising a pesticidally active compound; a surfactant mixture comprising an ethoxylated acid, an alkyl polyglycoside, and an ethoxylated castor oil; and water.

It is a purpose of this invention to provide a microdispersion composition consisting of a water-insoluble, solid biologically-active ingredient, a surfactant, an optional cosurfactant, and water.

WO 95 23 590 A discloses anthelmintic compositions and a method of preparation thereof, the compositions comprising water-insoluble benzimidazole pesticides dissolved in, suspended on and/or emulsified by a transdermal vehicle and a liquid carrier for the benzimidazole/vehicle, which includes a non-ionic emulsifier, an oil which solubilises a non-ionic emulsifier, a water or other diluent and deflocculating agent.

From FR 1 026 727 A aqueous suspensions and methods of preparation thereof are known, the suspensions comprising water-insoluble insecticides and dispersants, solvents and water.

DE 1 567 085 A discloses stable aqueous suspensions containing a hybrophobic solid, a hybrophilic colloid, a surfactant, a liquid or liquefied hydrocarbon and water. These suspensions are used as pesticidal and herbicidal compositions.

In GB 828 414 A microcristalline aqueous dispersions of DDT or benzene hexachloride are described which are obtained by mixing the molten pesticides with a mixture of salts of sulphated butyl oleate and with a non-ionic surface active agent.

Summary of the Invention

The present invention relates to a process for preparing a biologically-active microdispersion of a solid, water-insoluble biologically-active ingredient which process comprises:

a) heating the solid biologically-active ingredient in the presence of an ethoxylated castor oil, and optionally, one or more cosurfactants, wherein the HLB of the ethoxylated castor oil and, if present, the one or more cosurfactants is in the range of from 7 to 16, at a temperature sufficiently high enough to liquify the biologically-active ingredient, to produce an biologically-active ingredient/surfactant mixture;

b) adding water to the biologically-active ingredient/surfactant mixture, to produce a colloidal mixture; and

c) cooling the colloidal mixture to a temperature at which the biologically-active ingredient solidifies, to produce the biologically-active microdispersion of the solid, water-insoluble biologically-active ingredient.

This invention also relates to an agriculturally-active microdispersion prepared as described above consisting of:

a) a dispersed phase consisting of particles of a solid, water-insoluble agriculturally-active ingredient smaller than 500 nm in size, wherein the concentration of the solid, water-insoluble biologically- active ingredient in the microdispersion is 0.1 - 40 percent by weight;

b) 0.1 - 60 percent by weight of an ethoxylated castor oil

c) optionally, one or more co-surfactants; and

d) water.

Description of the Invention

The term "microdispersion" means a clear or transparent colloidal system comprising a water-insoluble solid finely dispersed in water.

The terms "clear" or "transparent" mean the appearance as a single phase without any particulate or colloidal material or a second phase being present when viewed by the naked eye.

The term "biologically-active ingredient" means any compound or compounds which have biological activity and are in solid form at room temperature and insoluble in water, such as, for example, pharmaceutically-active compounds and agriculturally-active compounds such as agricultural fertilizers, nutrients, plant growth accelerants, plant growth regulators, or pesticides such as insecticides, miticides, herbicides, fungicides, nematicides, and combinations thereof. Preferably the biologically-active ingredient is an agriculturally-active ingredient.

The abbreviation "a.i." means the biologically-active ingredient.

The term "insoluble" means having a solubility of less than <1% (w/w) at temperatures between about 40°F to about 90°F (about ~5°C to about ~30°C).

The solid, water-insoluble biologically-active ingredient can be liquified by heating the solid, water-insoluble biologically-active ingredient at a temperature high enough to liquify the solid, water-insoluble biologically-active ingredient. The solid, water-insoluble biologically-active ingredient can also be liquified by dissolving the solid, water-insoluble biologically-active ingredient in a suitable solvent capable of solubilizing the solid biologically-active ingredient, such as, e.g., one or more water-immiscible, volatile solvents capable of dissolving the solid biologically-active ingredient, or one or more surfactants and, optionally, one or more cosurfactants, capable of solubilizing the solid biologically-active ingredient. A combination of heating and dissolution can also be used to liquify the solid biologically-active ingredient.

The surfactant or mixture of surfactant and cosurfactant preferably have a hydrophilic-lipophilic balance (HLB) within a specified range. By "hydrophilic-lipophilic balance" is meant an empirical quantity, on an arbitrary scale, which is a measure of the polarity of a surfactant or mixture of surfactants. See P. Becher et al., "Nonionic Surfactant, Physical Chemistry," Marcel Dekker, N.Y. (1987), pages 439-456. It is a widely known and used term.

The surfactant, or more preferably, the mixture of surfactant and cosurfactant, should be chosen from those having a resulting HLB value in the range of from about 7 to about 16, more preferably about 8 to about 13. When a mixture of surfactant and cosurfactant is employed, while one of the components may have a value outside the desired range, e.g., below about 5, it will be understood that by mixing in surfactant and/or cosurfactant with HLB's greater than, e.g., about 9, the resulting combined HLB value will be in the range of 7 to 16. Also, it is desirable that at least one of the surfactants have a molecular weight of at least about 500, although this weight is not critical.

Surfactants which can be employed include both ionic agents, i.e., cationic, anionic or zwitterionic, and non-ionic agents, or mixtures thereof. Examples of cationic surfactants include alkylamines such as $C_{12}$-$C_{18}$ fatty amines, e.g., dimethyl lauramine, and ethoxylated amines such as ethoxylated $C_8$-$C_{19}$ fatty amines, e.g., PEG-15 tallow amine.

Examples of anionic surfactants include $C_8$-$C_{32}$ alkanoic acids and salts thereof; carboxylic acid esters such as $C_5$-$C_{29}$ monoesters of lactic acid; carboxylic acid ethers such as nonoxynol 8 carboxylic acid; phosphoric acid esters and salts including such phospholipids as phosphatidic acid and phosphatidyl serine; $C_8$-$C_{20}$ sulfonates, including alkyl-, olefin-, and alkylaryl derivatives; sulfuric acid esters such as alkyl sulfates and alkyl ether sulfates; and betaine derivatives.

Among the non-ionic surfactants which can be employed are $C_{10}$-$C_{40}$ alcohols; alkanolamides; ethoxylated carboxylic acid esters; ethoxylated glycerides such as ethoxylated castor oil; $C_5$-$C_{29}$ monoglycerides and ethoxylated derivatives thereof; $C_{20}$-$C_{130}$ sorbitol and sorbitan monoesters, diesters, and triesters, and polyoxyethylene (POE) derivatives thereof having 0 to 90 POE groups, e.g., polyoxyethylene sorbitan monooleate, sorbitol hexaoteate POE (50); trialkyl phosphate esters; ethoxylated alcohols; ethoxylated polysiloxanes; propoxylated POE ethers; and alkylpolyglycosides. (See, e.g., Surfactant Encyclopedia, Martin M. Rieger, 1993, published by Cosmetics & Toiletries magazine/Allured Publishing Corporation, Wheaton, IL)

As stated above, the molecular weight of these surfactants is not critical, but it is desirable that at least one of them have a molecular weight of at least about 500, more preferably greater than about 750.

A preferred surfactant is an ethoxylated castor oil (HLB about 10-16). The ethoxylated castor oil has preferably from between about 5 to 55 moles of ethylene oxide, more preferably, from between about 30 to 40 moles of ethylene oxide, chemically combined with each mole of castor oil. Examples of suitable ethoxylated castor oils useful in this invention include, e.g., PEG 25, PEG 30, PEG 36, PEG 40, and PEG 50 castor oil.

Preferably, the weight ratio (w/w) of the solid, water-insoluble biologically-active ingredient to the surfactant is between about 2:1 and 1:2, more preferably, between about 1.1:1 and 1:1.1, and most preferably, about 1:1.

For the purposes of this invention, the term "cosurfactant" means any compound which assists the surfactant in lowering the interfacial tension between the hydrophobic and hydrophilic phases. Such compounds typically show some miscibility with both the hydrophobic and hydrophilic phases, and comprise some polar bonds, such as, e.g., C-O, N-H, O-H, C-Cl, F-H, N=O, and C=O. Compounds useful as cosurfactants in the microdispersion of this invention include sorbitol, ethylene glycol, polyethylene glycol (PEG), mannitol, propylene glycol, monoalkyl ethers, and mono- and di-saccharides, medium fatty alcohols, acids or amines. Examples of suitable cosurfactants include, e.g., sorbitan monooleate, heptyl acetate, methyl-pyrrolidone, butyrolactone, octyl-pyrrolidone, EO/PO block copolymer, propylene glycol, and the like. The total amount of cosurfactant or cosurfactants present in the microdispersion of this invention is preferably from about 5 to about 30 percent by weight, more preferably from about 10 to about 20 percent by weight. Preferably, one or two cosurfactants are present in the microdispersion of this invention. Preferably, the weight ratio (w/w) of the surfactant to the cosurfactant is between about 4:1 and 1:4, more preferably, between about 3:1 and 1:3.

Water is present in the microdispersion in amounts preferably ranging from about 10 to about 80 percent by weight, more preferably from about 20 to about 50 percent by weight.

The biologically-active microdispersion of this invention can be prepared as follows:

A. The solid biologically-active ingredient is heated at a temperature sufficiently high enough to liquify the biologically-active ingredient, to produce a liquified biologically-active ingredient. Although there is no particular criticality to the sequence of addition and mixing, the liquified biologically-active ingredient is then typically mixed with one or more surfactants and, optionally, one or more cosurfactants, to produce an a.i./surfactant mixture. Water is then added to the a.i./surfactant mixture, preferably with agitation, to produce a colloidal mixture. Finally, the colloidal mixture is cooled to a temperature at which the biologically-active ingredient solidifies, to produce the microdispersion. This method is particularly suitable if the solid a.i. is not soluble in the surfactant or surfactant/cosurfactant mixture.

B. The solid biologically-active ingredient is mixed with one or more surfactants and, optionally, one or more cosurfactants, capable of solubilizing the solid biologically-active ingredient, to produce an a.i./surfactant mixture. Water is then added to the a.i./surfactant mixture, preferably with agitation, to produce the microdispersion. This method is particularly suitable if the solid a.i. is soluble in the surfactant or in the surfactant/cosurfactant mixture.

C. The solid biologically-active ingredient is dissolved in a water-immiscible, volatile solvent capable of dissolving the solid biologically-active ingredient, such as, e.g., methylene chloride, ethyl acetate, and certain short-chain hydrocarbons such as hexane, heptane, or octane, to produce an a.i./solvent mixture. One or more surfactants and, optionally, one or more cosurfactants, are then added to the a.i./solvent mixture, preferably with agitation, to produce an a.i./solvent/surfactant mixture. Water is then added to the a.i./solvent/surfactant mixture, preferably with agitation, to produce a colloidal mixture. Finally, the colloidal mixture is heated at a sufficiently high temperature and/or exposed to a sufficiently reduced pressure, to evaporate the solvent, to produce the microdispersion.

D. A combination of Methods A and B can be used to prepare the microdispersion of this invention. This method consists of the following steps:

The solid biologically-active ingredient is heated in the presence of one or more surfactants and, optionally, one or more cosurfactants, preferably with agitation, at a temperature sufficiently high enough to liquify the biologically-active ingredient, to produce an a.i./surfactant mixture. Water is then added to the a.i./surfactant mixture, preferably with agitation, to produce a colloidal mixture. Finally, the colloidal mixture is cooled to a temperature at which the biologically-active ingredient solidifies, to produce the microdispersion.

The agriculturally-active microdispersion of this invention preferably consists essentially of:

a) a dispersed phase consisting essentially of particles of a solid, water-insoluble agriculturally-active ingredient from about 10 to about 100 nm in size, wherein the concentration of the solid, water-insoluble agriculturally-active ingredient in the microdispersion is about 10 - 40 percent by weight, more preferably about 15 - 35 percent by weight;

b) about 10 - 40 percent by weight, more preferably about 20 - 40 percent by weight, of a surfactant, preferably, an ethoxylated castor oil;

c) optionally, one or more co-surfactants; and

d) water.

The following examples are provided to illustrate this invention.

**EXAMPLES**

**Example 1**

The microdispersions of Table 1 below were prepared as follows:

Ingredients

Imazalil: 1-[(2,4-dichlorophenyl)-2-(2-propenyloxy)-ethyl]-1H-imidazole; mp 50-55°C; (Janssen Pharmaceutica)
Metalaxyl: N-(2,6-dimethylphenyl)-N-(methoxy-acetyl)-alanine methyl ester; mp 71.8-72.3°C (Ciba)
Ethoxylated Castor Oil: (Witco)
Sorbitan Monooleate: Span 80 (ICI)
Heptyl Acetate: Exxate 700 (Exxon)
Methyl Pyrrolidone: AgsolEx 1 (ISP)
Butyrolactone: (ISP)
Octyl Pyrrolidone: AgsolEx 8 (ISP)
EO/PO Block Copolymer: Pluronic 17R2 (BASF)

Preparation:

A. Preparation of Microdispersions Nos. 1 and 2

Imazalil and PEG 40 castor oil were combined in a beaker and heated on a hot plate at 60°C with stirring until the mixture became a clear liquid. Water was then added to the mixture with stirring. A clear to turbid to clear phase transition of the mixture was observed during the water addition. The resultant mixture was then cooled to room temperature to produce a clear, homogeneous, amber-colored microdispersion.

B. Preparation of Microdispersions Nos. 3 - 20

All the ingredients except water were combined in a beaker and heated at 50°C in an oven for one hour. The resultant mixture was then stirred until no solid materials were present. If solid persisted, the mixture was reheated in the oven at 50°C and stirred until no solid was present. Water was then added with stirring to the mixture. In most cases, a clear to turbid to clear phase transition of the mixture was observed during the water addition. The resultant mixture was then cooled to room temperature to produce a clear, homogeneous, amber-colored microdispersion.

Table 1

| Ingredient | Microdispersion No. (Weight Percent) | | | | | | | | | |
|---|---|---|---|---|---|---|---|---|---|---|
| | 1 | 2 | 3 | 4 | 5 | 6 | 7 | 8 | 9 | 10 |
| Imazalil | 8.3 | 36.1 | 31.7 | 31.7 | 31.5 | 31.8 | 31.8 | 31.8 | -- | -- |
| Metalaxyl | -- | -- | -- | -- | -- | -- | -- | -- | 20.0 | 20.0 |
| Ethoxylated Castor Oil (PEG-40) | 11.4 | 35.8 | -- | -- | 28.0 | -- | -- | 31.0 | 20.0 | 20.0 |
| Ethoxylated Castor Oil (PEG-36) | -- | -- | 31.0 | 31.0 | -- | 31.0 | 30.9 | -- | -- | -- |
| Sorbitan Monooleate | -- | -- | 12.8 | -- | -- | -- | -- | -- | -- | -- |
| Heptyl Acetate | -- | -- | -- | 12.8 | -- | -- | -- | -- | -- | 10.0 |
| Methyl-Pyrrolidone | -- | -- | -- | -- | 12.8 | -- | -- | -- | -- | -- |
| Butyrolactone | -- | -- | -- | -- | -- | 12.7 | -- | -- | 20.0 | 20.0 |
| Octyl-Pyrrolidone | -- | -- | -- | -- | -- | -- | 12.8 | -- | -- | -- |
| EO/PO Block Copolymer (MW 2150) | -- | -- | -- | -- | -- | -- | -- | -- | 10.0 | -- |
| Propylene Glycol | -- | -- | -- | -- | -- | -- | -- | 13.5 | -- | -- |
| Water | 80.3 | 28.3 | 24.5 | 24.5 | 27.7 | 24.5 | 24.5 | 23.7 | 30.0 | 30.0 |

Table 1 (continued)

| Ingredient | Microdispersion No. (Weight Percent) | | | | | | | | | |
|---|---|---|---|---|---|---|---|---|---|---|
| | 11 | 12 | 13 | 14 | 15 | 16 | 17 | 18 | 19 | 20 |
| Imazalil | -- | -- | 29.9 | 32.2 | 26.1 | 23.2 | 20.9 | 31.5 | 31.5 | -- |
| Metalaxyl | 20.0 | 20.0 | -- | -- | -- | -- | -- | -- | -- | 18.2 |
| Ethoxylated Castor Oil (PEG-40) | 20.0 | 20.0 | 29.4 | 31.7 | 25.8 | 22.9 | 20.6 | 31.0 | 31.0 | 18.2 |
| Ethoxylated Castor Oil (PEG-36) | -- | -- | -- | -- | -- | -- | -- | -- | -- | -- |
| Sorbitan Monooleate | -- | -- | -- | -- | -- | -- | -- | -- | -- | -- |
| Heptyl Acetate | -- | -- | -- | -- | -- | -- | -- | -- | -- | -- |
| Methyl-Pyrrolidone | -- | -- | -- | -- | -- | -- | -- | -- | -- | -- |
| Butyrolactone | 20.0 | 20.0 | 12.1 | 13.1 | 10.6 | 9.5 | 8.5 | -- | 12.8 | 28.9 |
| Octyl-Pyrrolidone | 11.0 | -- | -- | -- | -- | -- | -- | 12.8 | -- | -- |
| EO/PO Block Copolymer (MW 2150) | -- | -- | -- | -- | -- | -- | -- | -- | -- | -- |
| Propylene Glycol | -- | -- | -- | -- | -- | -- | -- | -- | -- | -- |
| Water | 40.0 | 28.8 | 23.0 | 23.0 | 37.5 | 44.4 | 50.0 | 24.7 | 24.7 | 34.7 |

Table 2

| Stability of Undiluted Microdispersions | |
|---|---|
| Microdispersion No. | Stability |
| 1 | Clear and homogeneous liquid at room temperature (RT) for 26 days; some crystal growth after 26 days |
| 2 | Clear and homogeneous liquid at RT and 6°C for at least 7 days; some crystal growth after 8 months at RT |
| 3 | Clear and homongenous liquid at RT for at least 8 months |
| 4 | Clear and homongenous at time of preparation; no stability data |
| 5 | Clear and homogeneous liquid at both RT and at 6°C for at least 2 weeks; crystal growth after 1 month storage at RT |

Table 2   (continued)

| Microdispersion No. | Stability |
|---|---|
| | Stability of Undiluted Microdispersions |
| 6 | Clear and homogeneous liquid at both RT and at 40°C for at least 8 months; did not freeze or show crystal growth after 1 month at 7°C |
| 7 | Clear and homogeneous liquid at RT for at least 7 months; did not freeze or show crystal growth after 1 month at -5°C |
| 8 | Clear and homogeneous liquid at RT for at least 8 months; did not freeze or show crystal growth after 1 month at -7°C |
| 9 | Clear and homogeneous liquid at RT for at least 7 months; stable after 1 month storage at 40°C ; reconstituted to a clear and homongenous liquid after 3 freeze/thaw cycles |
| 10 | Clear and homogeneous liquid at RT for at least 7 months; stable after 1 month storage at 40°C ; reconstituted to a clear and homongenous liquid after 3 freeze/thaw cycles |
| 11 | Clear and homogeneous liquid at RT for at least 7 months; stable after 1 month storage at 40°C ; reconstituted to a clear and homongenous liquid after 3 freeze/thaw cycles |
| 12 | Clear and homogeneous liquid at RT for at least 7 months; stable after 1 month storage at 40°C ; reconstituted to a clear and homongenous liquid after 3 freeze/thaw cycles |
| 13 | Clear and homogeneous liquid at RT for at least 3 days |
| 14 | Clear and homogeneous liquid at RT for at least 3 days |
| 15 | Clear and homogeneous liquid at RT for at least 3 days |
| 16 | Clear and homogeneous liquid at RT for at least 3 days |
| 17 | Clear and homogeneous liquid at RT for at least 3 days |
| 18 | Clear and homogeneous liquid at RT for at least 2 years; clear and homogeneous liquid at 40°C for at least 7 months; clear and homogeneous liquid at -5°C for at least 1 month; did not freeze after one month at -5°C ; reconstituted after 1 freeze/thaw cycle (24 hours at -20°C to 24 hours at RT); median particle size was determined to be 76 nm by Laser Scattering Particle Size Distribution Analyzer, Horiba LA·910 |
| 19 | Clear and homogeneous liquid at RT for at least 26 months; clear and homogeneous liquid at 40°C for at least 26 months; did not freeze or show crystals after 1 month at -7°C ; reconstituted after 1 freezelthaw cycle (24 hours at -20°C to 24 hours at RT); separated a slightly turbid top layer after 2 months at 50°C but became clear and homogeneous again upon returning to RT |
| 20 | Clear and homogeneous liquid at RT, 40°C, 50°C, and -20°C for at least 1 month |

Certain of Microdispersions Nos. 1-20 were diluted with water to determine their stability in diluted form. Table 2A below describes the stability of various dilutions of certain of the microdispersions. All dilutions were clear at the time of dilution (i.e., day 0) .

Table 2A

| Microdispersion No. | % Conc. in Water (w/w) | Dilution Stability |
|---|---|---|
| 5 | 1 | After 3 days, appearance changed from clear to translucent to turbid but remained homogeneous and showed no crystals |
| 5 | 10 | " |
| 6 | 1 | Clear and homogeneous for at least 7 days |
| 6 | 5 | " |
| 7 | 5 | During 8 day storage, changed from transparent to translucent but remained homogeneous and showed no crystals |

Table 2A   (continued)

| Microdispersion No. | % Conc. in Water (w/w) | Dilution Stability |
|---|---|---|
| 8 | 5 | " |
| 9 | 5 | Stable for at least 20 days |
| 9 | 50 | Clear and stable against crystallization for 2 days |
| 10 | 5 | Transparent and homogeneous for 3 days; showed some phase separation on day 7 but was reconstituted with shaking and was stable against crystallization for at least 20 days |
| 10 | 50 | Phase separation after 2 days but was reconstituted with shaking and was stable against cyrstallization for at least 20 days . |
| 11 | 2 | Clear and homogeneous for at least 1 month |
| 11 | 5 | " |
| 11 | 10 | " |
| 11 | 20 | " |
| 11 | 33 | " |
| 11 | 50 | " |
| 12 | 5 | Showed crystals on day 3 |
| 12 | 50 | Showed crystals on day 2 |
| 18 | 1 | Clear and homogeneous for at least 8 months |
| 18 | 3 | " |
| 18 | 6.7 | " |
| 18 | 14 | " |
| 18 | 25 | " |
| 19 | 5 | Clear and stable for at least 3 days |
| 20 | 2 | Clear and homogeneous for at least 8 days |
| 20 | 5 | " |
| 20 | 10 | " |
| 20 | 20 | " |
| 20 | 33 | " |
| 20 | 50 | " |

## Example 2

Determination of Fungicidal Activity Using NSL+ Screen

Microdispersions Nos. 18 and 19 were each applied to two varieties of Barley seed (Harrington and Steptoe) and Wheat seed (Stephens) at a rate of 15 ml/45.5 kg of seed (0.5 fl oz/100 pounds of seed ("cwt")).

One (1) month after treatment, the treated seeds were planted in a natural sandy loam (NSL) mixture composed of a 1:1 mixture of sand to loam, in which the loam is infested with *Pythium spp.* and *Fusarium graminearum* fungi. The planted seeds were placed into a 10°C atmosphere to allow for *Pythium* pressure. After 10 days, the seeds were moved to a greenhouse (27°C) for seedling emergence and survival evaluation. All treatments were replicated five times and placement in the greenhouse was randomized.

An untreated control in which untreated seeds were planted in the NSL was included for each seed variety. A sterile control consisting of untreated seeds being planted in a sterilized NSL mixture was also included for each seed variety.

Table 3 below shows the results of the above NSL+ Screen. Percent stand (% Stand) was determined by the formula:

$$\frac{\text{Seeds germinated}}{\text{Seeds planted}} \times 100 = \% \text{ Stand}$$

Table 3

| Test Cmpd | Barley (Harrington) (DAP)[1] | | | Barley (Steptoe) (DAP) | | | Wheat (Stephens) (DAP) | | |
|---|---|---|---|---|---|---|---|---|---|
| . | 3 | 14 | 21 | 3 | 14 | 21 | 3 | 14 | 21 |
| UTC[2] | 75 | 60 | 47 | 59 | 44 | 35 | 16 | 10 | 9 |
| 18 | 79 | 79 | 72 | 78 | 77 | 61 | 50 | 42 | 28 |
| 19 | 83 | 70 | 60 | 88 | 89 | 82 | 44 | 36 | 32 |
| Sterile[3] | 69 | 72 | 72 | 97 | 100 | 100 | 91 | 96 | 96 |

[1] Days after planting
[2] Untreated control
[3] Sterile control

## Example 3

Determination of Fungicidal Activity Using *Pythium* Ultimum Screen

Microdispersion No. 20 was compared to the untreated control according to the following procedure:

Microdispersion No. 20 was applied to cotton seed (DP50) at the concentrations listed below in Table 4. Known amounts of the pathogen *Pythium Ultimum* were incorporated into a sterile 1:1 mixture of sand and loam. The treated and untreated cotton seeds were placed into flats containing the inoculated soil mixture and placed in a 20°C environment for seedling emergence and survival evaluation. All treatments were replicated five (5) times and placement in the greenhouse was randomized.

Table 4 shows the results of the above *Pythium Ultimum* Screen.

Table 4

| *Pythium Ultimum* Screen (% Stand on Day 21)[1] | |
|---|---|
| Concentration (ppm) | % Stand |
| 37.5 | 58 |
| 75 | 77 |
| 100 | 65 |
| 150 | 71 |

[1] % Stand of untreated control was 0%

## Claims

1.   A process for preparing a biologically-active microdispersion of a solid, water-insoluble biologically-active ingredient which process comprises:

a) heating the solid biologically-active ingredient in the presence of an ethoxylated castor oil, and optionally, one or more cosurfactants, wherein the HLB of the ethoxylated castor oil and, if present, the one or more cosurfactants is in the range of from 7 to 16, at a temperature sufficiently high enough to liquify the biologically-active ingredient, to produce an biologically-active ingredient/surfactant mixture;

b) adding water to the biologically-active ingredient/surfactant mixture, to produce a colloidal mixture; and
c) cooling the colloidal mixture to a temperature at which the biologically-active ingredient solidifies, to produce the biologically-active microdispersion of the solid, water-insoluble biologically-active ingredient.

**2.** A process as recited in claim 1 wherein the biologically-active ingredient is an agriculturally-active ingredient.

**3.** A agriculturally-active microdispersion prepared as described in claim 2, consisting of:

a) a dispersed phase consisting of particles of a solid, water-insoluble agriculturally-active ingredient smaller than 500 nm in size, wherein the concentration of the solid, water-insoluble agriculturally-active ingredient in the microdispersion is 0.1 - 40 percent by weight;

b) 0.1 - 60 percent by weight of an ethoxylated castor oil;

c) optionally, one or more co-surfactants; and

d) water.

**4.** An agriculturally-active microdispersion as recited in claim 3 consisting of:

a) a dispersed phase consisting of particles of a solid, water-insoluble agriculturally active ingredient from 10 to 100 nm in size, wherein the concentration of the solid, water-insoluble agriculturally active ingredient in the microdispersion is 10 - 40 percent by weight;

b) 10 - 40 percent by weight of an ethoxylated castor oil;

c) optionally, one or more co-surfactants; and

d) water.

**5.** A agriculturally-active microdispersion as recited in claim 4 wherein the concentration of the solid, water-insoluble agriculturally-active ingredient in the microdispersion is 15 - 35 percent by weight.

**6.** An agriculturally-active microdispersion as recited in claim 4 wherein the concentration of the ethoxylated castor oil in the microdispersion is 20 - 40 percent by weight.

**7.** An agriculturally-active microdispersion as recited in claim 6 wherein the cosurfactant is selected from group consisting of sorbitan monooleate, heptyl acetate, methyl-pyrrolidone, butyrolactone, octyl-pyrrolidone, EO/PO block copolymer, and propylene glycol.

**Patentansprüche**

**1.** Verfahren zur Herstellung einer biologisch wirksamen Mikrodispersion eines festen, wasserunlöslichen, biologisch wirksamen Bestandteils, wobei das Verfahren die folgenden Stufen umfasst:

a) Erwärmen des festen, biologisch wirksamen Bestandteils in Gegenwart eines ethoxylierten Rizinusöls und gegebenenfalls eines oder mehrerer Cotenside, wobei der HLB-Wert des ethoxylierten Rizinusöls und - falls vorhanden - des einen oder der mehreren Cotenside in einem Bereich von 7 bis 16 liegt, auf eine Temperatur, die ausreichend hoch ist, um den biologisch wirksamen Bestandteil zu verflüssigen, wobei ein Gemisch aus biologisch wirksamem Betandteil und Tensid erhalten wird;
b) Zugeben von Wasser zu dem Gemisch aus biologisch wirksamem Betandteil und Tensid, wobei ein kolloidales Gemisch erhalten wird; und
c) Abkühlen des kolloidalen Gemisches auf eine Temperatur, bei der sich der biologisch wirksame Bestandteil verfestigt, wobei die biologisch wirksame Mikrodispersion des festen, wasserunlöslichen, biologisch wirksamen Bestandteils erhalten wird.

**2.** Verfahren nach Anspruch 1, wobei der biologisch wirksame Bestandteil ein landwirtschaftlich wirksamer Bestandteil ist.

3.  Landwirtschaftlich wirksame Mikrodispersion, hergestellt gemäß Beschreibung in Anspruch 2, die aus folgenden Bestandteilen besteht:

    a) einer dispergierten Phase aus Teilchen eines festen, wasserunlöslichen, landwirtschaftlich wirksamen Bestandteils einer Größe von kleiner als 500 nm, wobei die Konzentration des festen, wasserunlöslichen, landwirtschaftlich wirksamen Bestandteils in der Mikrodispersion 0,1 bis 40 Gew.-% beträgt;
    b) 0,1 bis 60 Gew.-% eines ethoxylierten Rizinusöls;
    c) gegebenenfalls einem oder mehreren Cotensiden und
    d) Wasser.

4.  Landwirtschaftlich wirksame Mikrodispersion gemäß Anspruch 3, die aus folgenden Bestandteilen besteht:

    a) einer dispergierten Phase aus Teilchen eines festen, wasserunlöslichen, landwirtschaftlich wirksamen Bestandteils einer Größe von 10 bis 100 nm, wobei die Konzentration des festen, wasserunlöslichen, landwirtschaftlich wirksamen Bestandteils in der Mikrodispersion 10 bis 40 Gew.-% beträgt:
    b) 10 bis 40 Gew.-% eines ethoxylierten Rizinusöls;
    c) gegebenenfalls einem oder mehreren Cotensiden und
    d) Wasser.

5.  Landwirtschaftlich wirksame Mikrodispersion gemäß Anspruch 4, wobei die Konzentration des festen, wasserunlöslichen, landwirtschaftlich wirksamen Bestandteils in der Mikrodispersion 15 bis 35 Gew.-% beträgt.

6.  Landwirtschaftlich wirksame Mikrodispersion gemäß Anspruch 4, wobei die Konzentration des ethoxylierten Rizinusöls in der Mikrodispersion 20 bis 40 Gew.-% beträgt.

7.  Landwirtschaftlich wirksame Mikrodispersion gemäß Anspruch 6, wobei das Cotensid aus der Gruppe ausgewählt ist, die aus Sorbitanmonooleat, Heptylacetat, Methylpyrrolidon, Butyrolacton, Octylpyrrolidon, EO/PO-Blockcopolymer und Propylenglycol besteht.

**Revendications**

1.  Procédé de préparation d'une microdispersion biologiquement active d'un ingrédient biologiquement actif solide et insoluble dans l'eau, lequel procédé comprend les étapes consistant à :

    a) chauffer l'ingrédient biologiquement actif solide en présence d'une huile de ricin éthoxylée et éventuellement d'un ou plusieurs cotensioactifs, dans lequel la HLB de l'huile de ricin éthoxylée et, le cas échéant, de l'un ou plusieurs cotensioactifs, est dans la plage de 7 à 16, à une température suffisamment élevée pour liquéfier l'ingrédient biologiquement actif, pour produire un mélange ingrédient biologiquement actif/tensioactif ;
    b) ajouter de l'eau au mélange ingrédient biologiquement actif/tensioactif pour produire un mélange colloïdal ; et
    c) refroidir le mélange colloïdal jusqu'à une température à laquelle l'ingrédient biologiquement actif se solidifie, pour produire une microdispersion biologiquement active de l'ingrédient biologiquement actif solide et insoluble dans l'eau.

2.  Procédé selon la revendication 1, dans lequel l'ingrédient biologiquement actif est un ingrédient actif en milieu agricole.

3.  Microdispersion active en milieu agricole préparée selon la revendication 2, constituée de :

    a) une phase dispersée constituée de particules d'un ingrédient actif en milieu agricole solide et insoluble dans l'eau d'une taille inférieure à 500 nm, dans laquelle la concentration en ingrédient actif en milieu agricole solide et insoluble dans l'eau de la microdispersion est comprise entre 0,1 et 40 % en poids ;
    b) 0,1 à 60 % en poids d'une huile de ricin éthoxylée ;
    c) éventuellement un ou plusieurs cotensioactifs ; et
    d) de l'eau.

**4.** Microdispersion active en milieu agricole selon la revendication 3, constituée de :

a) une phase dispersée constituée de particules d'un ingrédient actif en milieu agricole solide et insoluble dans l'eau d'une taille comprise entre 10 et 100 nm, dans laquelle la concentration en l'ingrédient actif en milieu agricole solide et insoluble dans l'eau de la microdispersion est comprise entre 10 et 40 % en poids ;
b) 10 à 40 % en poids d'une huile de ricin éthoxylée ;
c) éventuellement un ou plusieurs cotensioactifs ; et
d) de l'eau.

**5.** Microdispersion active en milieu agricole selon la revendication 4, dans laquelle la concentration en ingrédient actif en milieu agricole solide et insoluble dans l'eau de la microdispersion est comprise entre 15 et 35 % en poids.

**6.** Microdispersion active en milieu agricole selon la revendication 4, dans laquelle la concentration en huile de ricin éthoxylée de la microdispersion est comprise entre 20 et 40 % en poids.

**7.** Microdispersion active en milieu agricole selon la revendication 6, dans laquelle le cotensioactif est choisi dans le groupe constitué par le monooléate de sorbitane, l'acétate d'heptyle, la méthylpyrrolidone, la butyrolactone, l'octylpyrrolidone, un copolymère séquencé EO/PO, et le propylène glycol.